# EUROPÄISCHE PATENTANMELDUNG

(11) **EP 3 275 645 A1**
(43) Veröffentlichungstag der Anmeldung: **31.01.2018**
(21) Anmeldenummer: 16181095.7
(22) Anmeldetag: 25.07.2016
(51) Int. Cl.: B32B 7/08, B32B 3/06, B32B 3/08, B32B 3/12, B32B 3/26, B32B 5/18, B32B 15/04, B32B 15/20, B32B 21/04, B32B 27/06, B29C 65/54

(54) **SANDWICHBAUTEIL, VERFAHREN FÜR DIE HERSTELLUNG EINES SANDWICHBAUTEILS UND VERWENDUNG EINES SANDWICHBAUTEILS**

(71) Anmelder: nolax AG, 6203 Sempach Station (CH)
(72) Erfinder: Wolf, Thomas, 6025 Neudorf (CH); Steiner, Patrick, 6467 Schattdorf (CH); Brandmair, Anton, 6207 Nottwil (CH); Hug, Philipp, 6020 Emmenbrücke (CH); Frey, Thomas, 6204 Sempach (CH)
(74) Vertreter: Hepp Wenger Ryffel AG

(57) **Zusammenfassung**

Sandwichbauteil umfassend (i) eine erste Hauptfläche mit einer ersten Decklage und eine zweite Hauptfläche mit einer zweiten Decklage, wobei die erste Decklage und/oder die zweite Decklage eine Öffnung, Schwächung oder Markierung aufweist und/oder im Seitenbereich eine Öffnung, Schwächung oder Markierung vorgesehen ist, (ii) mindestens eine Zwischenschicht, wobei die Zwischensicht zwischen der ersten Decklage und der zweiten Decklage positioniert ist, und (iii) eine in die Zwischenschicht Polymerzusammensetzung, die zwischen der ersten und der zweiten Decklage und im Wesentlichen innerhalb der Zwischenschicht und/oder im Bereich der Öffnung, Schwächung oder Markierung angeordnet ist. Ein mechanisches Verbindungsmittel ist in der Polymerzusammensetzung durch die die erste Decklage und/oder die zweite Decklage und/oder im Seitenbereich im Bereich der Öffnung, Schwächung oder Markierung, insbesondere durch die erste Decklage und/oder die zweite Decklage und/oder den Seitenbereich hindurch ragend, in der Polymerzusammensetzung fixiert oder fixierbar.

## Beschreibung

Die Erfindung betrifft ein Sandwichbauteil, Verfahren zur Herstellung eines Sandwichbauteils, ein Kit und ein Verfahren zum Verbinden eines Sandwichbauteils gemäss den unabhängigen Ansprüchen.

Als Konstruktionsweise bezeichnet die Sandwichbauweise eine Form des Leichtbaus, bei dem die Bauteile aus kraftaufnehmenden festen Decklagen bestehen, die durch einen relativ weichen, meist leichten, Kernwerkstoff (Zwischenschicht) auf Abstand gehalten werden. Diese Teile sind bei geringem Gewicht sehr biege- und beulsteif. Ihre Berechnung wird im Bauwesen nach der linearen Sandwichtheorie vorgenommen. Der Kern kann aus Papierwaben, Metallwaben, insbesondere Aluminiumwaben, Schaumstoffen, beispielsweise Hartschaum, Mineralwolle oder Balsaholz bestehen. Er überträgt auftretende Schubkräfte und stützt die Decklagen. Oft wird auch die wärmedämmende und akustische Isolationseigenschaft der sehr leichten Kernwerkstoffe genutzt. Als Decklagen werden unter anderem Blech, Metalle wie Aluminium, Chrom-Nickel-/Verzinkt Stahl, Faserverbundwerkstoffe; Kunststoffe wie Polypropylen (PP), Polyvinylchlorid (PVC), Polysulfon (PS), Polyurethan (PUR); faserverstärkte Kunststoffe wie Glasfaserverstärkter Kunststoff (GFK), Aramid, Kohlenstofffaserverstärkter Kunststoff (CFK); Holzwerkstoffe wie (Sperr)holz, hochdichte Faserplatten (HDF); mineralische Werkstoffe, insbesondere Glas; Stein benutzt. Oft werden Krafteinleitungspunkte mit Verstärkungen versehen.

Bei handelsüblichen Lösungen mit Verstärkungen, beispielsweise sogenannte Inserts, welche in die Sandwichstruktur eingebracht werden, oder sogenannte Onserts, welche auf die Sandwichstruktur aufgebracht werden, gilt es bezüglich der Kraftübertragung grundsätzlich zu unterscheiden zwischen der Kraftübertragung von dem mechanischen Verbindungsmittel auf das Insert oder Onsert und der Kraftübertragung vom Insert oder Onsert auf das eigentliche Bauteil.

Handelsübliche punktuelle Krafteinleitungen in Leichtbauwerkstoffe insbesondere Blindbefestigungen in Sandwichpaneelen bzw. Sandwichbauteilen weisen den Nachteil auf, dass das Insert oder Onsert für die Krafteinleitungen manuell eingebracht werden muss, da die Automatisierung aufwendig ist. Dies führt zu hohen Prozesskosten und geringer Prozesssicherheit. Des Weiteren ist nachteilig, dass durch standardisierte Verbindungsmittel das Produktdesign und die Flexibilität der Komponenten herstellerseitig stark limitiert sind.

Nachteilig an bekannten Lösungen ist auch, dass die möglichen Belastungswerte insbesondere bei Sandwichbauteilen begrenzt sind, da die Krafteinleitung oft nicht optimal auf die beiden tragenden Decklagen flächig abgeleitet werden können.

Es ist daher eine Aufgabe der Erfindung die Nachteile des Stands der Technik zu überwinden. Insbesondere ist es eine Aufgabe der Erfindung ein Sandwichbauteil bereitzustellen, welches eine optimierte Krafteinleitung und/oder Kraftableitung in die tragenden Decklagen ermöglicht. Des Weiteren ist es insbesondere Aufgabe der Erfindung ein automatisiertes Verfahren und/oder ein situationsbedingtes Einbringen oder Anbringen eines krafteinleitenden und/oder kraftableitenden Elements in ein Sandwichbauteil bereitzustellen.

Diese Aufgaben werden durch die Merkmale der unabhängigen Ansprüche gelöst.

Die Erfindung betrifft ein Sandwichbauteil, welche eine erste Hauptfläche mit einer ersten Decklage und eine zweite Hauptfläche mit einer zweiten Decklage umfasst. Diese sind insbesondere eine erste Deckplatte und eine zweite Deckplatte. Die erste Decklage und/oder die zweite Decklage weist eine Öffnung, Schwächung oder Markierung auf und/oder im Seitenbereich, insbesondere in einer Abdeckung, ist eine Öffnung, Schwächung oder Markierung vorgesehen. Das Sandwichbauteil weist mindestens eine Zwischenschicht auf, wobei die Zwischensicht zwischen der ersten Decklage und der zweiten Decklage positioniert ist. In die Zwischenschicht ist eine insbesondere injizierte und vorzugsweise vernetzte Polymerzusammensetzung angeordnet, die zwischen der ersten Decklage und der zweiten Decklage und im Wesentlichen innerhalb der Zwischenschicht und/oder im Bereich der Öffnung, Schwächung oder Markierung angeordnet ist. Hierbei ist ein mechanisches Verbindungsmittel durch die erste Decklage und/oder die zweite Decklage und/oder im Seitenbereich, insbesondere der Abdeckung, im Bereich der Öffnung, Schwächung oder Markierung, insbesondere durch die erste Decklage und/oder die zweite Decklage und/oder den Seitenbereich, insbesondere die Abdeckung, hindurch ragend, in der Polymerzusammensetzung fixiert oder fixierbar.

Unter den Hauptflächen des Sandwichbauteils werden die flächigen Seiten verstanden, welche nicht von der Zwischenschicht gebildet werden. Die Hauptflächen entsprechen also den Flächen der Decklagen, welche von der Zwischenschicht wegweisen. Unter dem Seitenbereich bzw. den Seitenbereichen des Sandwichbauteils wird der Bereich bzw. die Bereiche verstanden, welche von den Decklagen und der Zwischenschicht ausgebildet werden.

Unter einer Abdeckung wird bevorzugt eine Platte, eine Schiene oder ein Sandwichbauteil verstanden. Die Abdeckung ist bevorzugt derart an einer Seite des erfindungsgemässen Sandwichbauteils angeordnet oder anordenbar, dass die Öffnung, Schwächung oder Markierung in einem Bereich der seitlich freiliegenden Zwischenschicht angeordnet ist.

Unter "fixiert" wird hier und im Folgenden verstanden, dass das Verbindungsmittel in oder an die Polymerzusammensetzung eingebracht oder angebracht ist. Unter "fixierbar" wird hier und im Folgenden verstanden, dass das Verbindungsmittel einbringbar in oder anbringbar an die Polymerzusammensetzung ist.

Auf dieses Weise wird ein Sandwichbauteil bereitgestellt, welches verschiedene mechanische Verbindungen, bspw. verschiedene Schraubentypen oder Gewindetypen, aufnehmen kann. Das Insert muss hier nicht wie bei handelsüblichen Metall- oder Kunststoffinserts auf eine definierte Schraube oder mechanisches Verbindungsmittel abgestimmt sein. Durch die Abstimmung der Eigenschaften der Polymerzusammensetzung und Insert-Geometrie können die physikalischen Eigenschaften des Krafteinleitungspunktes und damit des Bauteils optimiert werden. Des Weiteren können die Härte- & Elastizitätseigenschaften innerhalb eines Anschlusspunktes eingestellt werden, und so eine optimierte Krafteinleitung in die Bauteilstrukturen zu erzielen. Dies ist insbesondere bei dynamischen Lasten vorteilhaft. Des Weiteren vorteilhaft ist, dass abhängig von der Polymerzusammensetzung erhöhte Ein-und Ausdrehwiederstände (Drehmomente) gegenüber herkömmlichen Fixierungen in Metall- und Kunststoffinserts erzielt werden können. Durch die Eliminierung des Metall- oder Kunststoffinserts in dem erfindungsgemässen Sandwichbauteil kann die Anzahl der Grenzschichten und somit das Fehlerrisiko bezüglich Adhäsion und/oder Korrosion reduziert werden.

Das Verbindungsmittel kann ausgewählt sein aus der Gruppe umfassend Schraube, Gewindestange, Clip, Bolzen, Buchsen, Hülsen, Distanzhalter, Stifte, Nagel, Haken, Klammer, Feder, Nieten, Dübel, Profile, Laschen, Scharniere, Magnete.

Das Verbindungsmittel kann vor dem Einbringen der Polymerzusammensetzung vorpositioniert und mit der Polymerzusammensetzung angespritzt oder umspritzt werden oder nach dem Verfestigen der Polymerzusammensetzung in oder an diese eingebracht oder angebracht werden.

Die Polymerzusammensetzung kann entsprechend den Formulierungen offenbart in EP 2 589 478 A1 gewählt werden. Diese werden durch Bezugnahme aufgenommen. Die Polymerzusammensetzung ist insbesondere ein Klebstoff mit den folgenden Eigenschaften. Der Klebstoff ist bevorzugt ein schnell aushärtender Zweikomponentenklebstoff auf Basis von Polyharnstoff wie in EP 1 958 975 B1 oder EP 2 871 194 beschrieben. Diese werden durch Bezugnahme aufgenommen.

Bevorzugt umfasst die Polymerzusammensetzung eine isocyanathaltige Komponente A und eine aminhaltige Komponente B. Die Komponente A enthält ein Isocyanat-terminiertes Präpolymer mit einer Isocyanat-Funktionalität von ≥ 1,7, vorzugsweise von 1,7 < f_{NCO} < 3, besonders bevorzugt im Bereich von 2 bis 3. Die Komponente B enthält wenigstens ein Di- und/oder Polyamin, vorzugsweise ein Polyetherdiamin und/oder Polyetherpolyamin. Das stöchiometrische Verhältnis von Isocyanatgruppen in Komponente A zu Amingruppen in Komponente B beträgt hierbei 0,5 bis 1,2, besonders bevorzugt 1.

Besonders bevorzugt umfasst die Polymerzusammensetzung eine erste Komponente A und eine zweite Komponente B. Die Komponente A enthält ein monomeres Polyisocyanat insbesondere monomeres Diisocyanat und ein isocyanat-terminiertes Präpolymer und/oder ein Präpolymergemisch mit einer Isocyanatfunktionalität ≥ 1.7, bevorzugt im Bereich von 1.7 < f_{NCO} < 3, besonders bevorzugt im Bereich von 2 < f_{NCO} < 3. Die zweite Komponente B enthält ein Di-und/oder Polyamin, insbesondere ein Polyetherdiamin und/oder ein Polyetherpolyamin; und einen Trimerisierungskatalysator. Das stöchiometrische Verhältnis von Isocyanatgruppen in der ersten Komponente A zu in der Zusammensetzung enthaltenen isocyanatreaktiven Wasserstoffatomen in der zweiten Komponente B beträgt 7.5 bis 25, bevorzugt 10 bis 20, besonders bevorzugt 15. Es wird somit ein Zwei-Komponenten-Polymerzusammensetzung verwendet, bei welcher in einem ersten Schritt über eine Reaktion des im Überschuss vorhandenen monomeren Polyisocyanats (insbesondere des Diisocyanats) mit dem Polyamin ein zweites Präpolymer gebildet wird. Diese Reaktion ist stark exotherm. Gleichzeitig erfolgt eine Vernetzung des isocyanat-terminierten Präpolymers der Komponente A durch in der Komponente B bereitgestellte Amine. Im weiteren Reaktionsverlauf kommt es unter dem Einfluss von einschlägigen Katalysatoren, insbesondere Kaliumoctoat, vorwiegend zu einer Trimerisierung der vorhandenen Isocyanatgruppen. So weist die Polymerzusammensetzung im Vergleich zu üblichen Polyurethan- und Polyurea-Klebstoffen sowohl höhere Zugfestigkeit und Wärmebeständigkeit als auch eine höhere Schlagzähigkeit auf als andere hochfeste Klebstoffe wie beispielsweise Epoxidharze.

Grundsätzlich sind auch andere zweikomponentige, zu Duromeren aushärtende Klebstoffe auf Basis von Polyurethan, Epoxid oder Acrylat einsetzbar. Der Klebstoff wird als flüssig bezeichnet im bestimmungsgemässen Auftragszustand bei einer Viskosität von <10000 mPas, vorzugsweise <300 mPas, idealerweise <100 mPas (gemessen im Mischkopf des Applikators bei 35°C-65°C, vorzugsweise 50°C und einen Druck von 70-140 bar, vorzugsweise 100 bar). Diese Mischviskosität kann durch Anwählen der Temperatur der Komponenten weiter optimiert werden.

Das Aushärten bezeichnet in diesem Zusammenhang die chemische Verfestigung des Klebstoffes durch Polymerisation, -kondensation und -addition. Derart wird eine schnell insbesondere chemisch abbindende, strukturell belastbare Polymerzusammensetzung bereitgestellt.

Die Öffnung kann ausgewählt sein aus der Gruppe Schlitz, Bohrung, insbesondere kreisrunde Bohrung. Diese können mechanisch durch Bohren, Fräsen, Stanzen, Schlitzen, Perforieren, Lasern, Schleifen, Schneiden, chemisch oder thermisch eingebracht werden. Dabei kann eine Öffnung, mehrere Öffnungen, mehrere vergleichsweise kleine Öffnungen, welche rund, eckig oder schlitzartig ausgestaltet sein. Freiformen sind ebenfalls möglich. Derart kann die Polymerzusammensetzung besonders vorteilhaft in die Zwischenschicht eingebracht werden.

Durch die Wahl der Öffnung als eine nicht-runde Öffnung beispielsweise als Schlitz wird ein Anschlusspunkt bereitgestellt, der einen Formschluss als Verdrehsicherung der verfestigten Polymerzusammensetzung sicherstellt. Derart können grösserer Kräfte aufgenommen werden.

Bei der Wahl der Öffnung als kleine, schmale Öffnungen kann eine verdeckte Montage ermöglicht werden.

Das Sandwichbauteil kann eine Wabenplatte, bevorzugt eine Metall-Wabenplatte, besonders bevorzugt eine Aluminium-Wabenplatte, eine Kunststoffkernwabenplatte, eine Holzwerkstoffwabenplatte, eine Schaumkernplatte oder eine Faserkern-Platte sein.

Die Decklagen können bevorzugt ausgewählt sein aus Metallen wie Aluminium, Chrom-Nickel-/Verzinkt Stahl; Kunststoffen wie Polypropylen (PP), Polyvinylchlorid (PVC), Polysulfon (PS), Polyurethan (PUR); faserverstärkten Kunststoffen wie Glasfaserverstärkter Kunststoff (GFK), Aramid, Kohlenstofffaserverstärkter Kunststoff (CFK); Holzwerkstoffen wie Sperrholz, hochdichte Faserplatten (HDF); mineralischen Werkstoffen, insbesondere Glas; Stein

Die Zwischenschicht kann bevorzugt ausgewählt sein aus Waben, Rippen, Stegen, wie beispielsweise Karton, Kunststoff, Metall, Faserverbundwerkstoff, Holzwerkstoff, Schaum-Werkstoff, Faser-Werkstoff und Schütt-Werkstoff aus Kunststoffen wie Polyvinylchlorid (PVC), Polyethylenterephthalat (PET), Polymethacrylimid (PMI), expanded Polystyren (EPS), extrudierter Polystyren-Schaum (XPS), recyceltem Material, Holzwerkstoffen wie Balsaholz, Weichfaser, Spanmaterial, Verbundmaterial, Röhrenspan, leichte Massivholzplatte; Glas; Stein; Metallen wie Aluminium.

Die Polymerzusammensetzung kann derart ausgestaltet sein, dass die Polymerzusammensetzung eine Hinterschneidung ausbildet. Dabei ist die Hinterschneidung bevorzugt an der ersten Decklage und/oder der zweiten Decklage, besonders bevorzugt an der der Zwischenschicht zugewandten Oberfläche der ersten Decklage und/oder der zweiten Decklage, ausgebildet. Somit kann eine formschlüssige Verbindung zwischen der Polymerzusammensetzung und der ersten und/oder der zweiten Decklage ausgebildet werden, sodass besonders starke Kräfte eingeleitet und auf die Decklagen abgeleitet werden können.

Des Weiteren kann die Polymerzusammensetzung derart ausgestaltet ist, dass es eine stoffschlüssige, d.h. adhäsive, und/oder formschlüssige und/oder kraftschlüssige Verbindung ausbildet. Die stoffschlüssige Verbindung ist bevorzugt zwischen der Polymerzusammensetzung und der Zwischensicht und/oder der ersten Decklage und/oder der zweiten Decklage ausgebildet. Auch durch diese Ausgestaltung werden besonders starke Kräfte eingeleitet und auf die Decklagen abgeleitet.

Ein weiterer Aspekt der Erfindung betrifft ein Verfahren zur Herstellung eines Sandwichbauteils, insbesondere wie vorstehend erläutert, mit mindestens einem Insert und/oder Onsert aus einer vernetzbares Polymerzusammensetzung. Das Verfahren umfasst den Schritt Bereitstellen eines Sandwichbauteils umfassend eine erste Decklage und eine zweite Decklage, insbesondere eine erste Deckschicht und eine zweite Deckschicht. Die erste Decklage und/oder die zweite Decklage und/oder eine Abdeckung auf einer Seite des Sandwichbauteils weist eine Öffnung, Schwächung oder Markierung auf. Das Sandwichbauteil weist mindestens eine zwischen der ersten Decklage und der zweiten Decklage positionierte Zwischenschicht auf.

Das Verfahren umfasst des Weiteren den Schritte Einbringen, insbesondere Injizieren, einer vernetzbaren Polymerzusammensetzung an der Stelle der Markierung oder der Schwächung oder durch die Öffnung in der ersten Decklage und/oder der zweiten Decklage und/oder der Abdeckung in die Zwischenschicht, und Verfestigen der Polymerzusammensetzung zwischen den Decklagen derart, dass ein mechanisches Verbindungsmittel durch die erste Decklage und/oder die zweite Decklage und/oder die Abdeckung im Bereich der Öffnung, Schwächung oder Markierung, insbesondere durch die erste und/oder die zweite Decklage und/oder die Abdeckung hindurch ragend, in der Polymerzusammensetzung fixierbar ist. Derart wird ein Verfahren bereitgestellt, mit welchem in einem schnellen Prozess Insert- und Onsertlösungen für Leichtbau-Strukturen, insbesondere Sandwichbauteile, erzielt werden. Ein vordefiniertes Insert, welches bspw. eingeklebt wird, benötigt es hierbei nicht. Des Weiteren wird eine Schädigung der Decklage(en) minimiert und der Krafteinleitungspunkt ist im Unterschied zu herkömmlichen Lösungen nicht an den Insert- oder Onsertdurchmesser gebunden. Das Verfahren ist kosteneffizienter und erhöht die Prozesssicherheit. Standardisierte Zusatzteile müssen nicht bereitgestellt werden.

Bevorzugte Polymerzusammensetzungen sind die vorgängig beschriebenen.

Die vernetzbare Polymerzusammensetzung kann ein, insbesondere zwei-komponentiger, Klebstoff sein. Derart wird eine Polymerzusammensetzung eingebracht, die nach dem Verfestigen strukturell belastbar und insbesondere nicht expandierend ist. Eine hohe Krafteinleitung wird beispielsweise über die Gewindeschneidung des mechanischen Verbindungsmittels erzielt. Durch die exothermen Eigenschaften der Polymerzusammensetzung kann die Zwischenschicht und/oder bestehende Klebeschichten des Sandwichbauteils beim Abreagieren der Polymerzusammensetzung bereichsweise aufgeschmolzen werden. Derart wird die Verankerung der Polymerzusammensetzung verbessert; das Verarbeiten von Befestigungselement auf Plastik, beispielsweise Plastikschrauben, wird verbessert. Bevorzugte Polymerzusammensetzung sind wie vorgängig beschrieben.

Die vernetzbare Polymerzusammensetzung kann eine Topfzeit im Bereich von 1 bis 15 sek, bevorzugt 2 bis 10 sek, besonders bevorzugt 3 bis 7 sek, aufweisen. Derart verfliesst die Polymerzusammensetzung an der Zielstelle nicht und entsprechend sind keine Positionierungshilfen beispielsweise Siebhülsen zur Positionierung der Polymerzusammensetzung notwendig. Des Weiteren kann das Sandwichbauteil umgehend weiterverarbeitet werden, da die Polymerzusammensetzung in sehr kurzer Zeit die notwendige Festigkeit aufweist, um beispielsweise eine belastbare Verbindung zu einem weiteren Bauteil mittels des Verbindungsmittels herzustellen.

Unter der Topfzeit wird gemäss DIN EN 923:1998-05 die Zeitspanne verstanden, in der ein Mehrkomponentenklebstoff nach dem Mischen verarbeitet werden kann. Die Topfzeit wurde nach dem "Verfahren 3: Bestimmung durch manuelle Auftragung" der DIN EN 14022:2010 bestimmt (Deutsche Fassung). Dabei muss selbstverständlich die schnelle Reaktionszeit des Systems berücksichtigt werden.

Das Verfahren kann des Weiteren den Schritt des Anbringens oder Einbringens eines Verbindungsmittels an bzw. in die Polymerzusammensetzung vor oder nach dem Verfestigen der Polymerzusammensetzung aufweisen. "In die Polymerzusammensetzung" heisst, dass das Verbindungsmittel an der Zielstelle vorpositioniert sein kann, sodass das Verbindungsmittel von der Polymerzusammensetzung umspritzt wird. Alternativ wird das Verbindungsmittel in die verfestigte Polymerzusammensetzung eingebracht, beispielsweise wird eine Schraube eingedreht.

Das Verbindungsmittel kann ausgewählt sein aus der Gruppe umfassend Schraube, Gewindestange, Clip, Bolzen, Buchsen, Hülsen, Distanzhalter, Stifte, Nagel, Hacken, Klammer, Feder, Nieten, Dübel, Profile, Laschen, Scharniere, Magnete.

Des Weiteren betrifft die Erfindung ein Kit für die Herstellung eines Sandwichbauteils, insbesondere wie vorstehend erläutert, mit mindestens einem Insert und/oder Onsert aus einer vorzugsweise vernetzten Polymerzusammensetzung aufweisend eine vernetzbare, insbesondere zwei-komponentige, Polymerzusammensetzung und Anwendungshinweise zur Durchführung eines Verfahrens wie vorgängig erläutert.

Ein weiterer Aspekt der Erfindung betrifft ein Verfahren zum Verbinden eines Sandwichbauteils, wie vorstehend erläutert, an ein weiteres Element umfassend den Schritt des Anbringens oder Einbringens eines Verbindungsmittel in die Polymerzusammensetzung vor oder nach dem Verfestigen der Polymerzusammensetzung.

Das Verbindungsmittel kann ausgewählt sein aus der Gruppe umfassend Schraube, Gewindestange, Clip, Bolzen, Buchsen, Hülsen, Distanzhalter, Stifte, Nagel, Haken, Klammer, Feder, Nieten, Dübel, Profile, Laschen, Scharniere, Magnete.

Des Weiteren betrifft die Erfindung die Verwendung eines Sandwichbauteils wie vorgängig erläutert im Bereich Road, insbesondere Nutzfahrzeuge, PKW, Nutzfahrzeuge, Formel 1, Reisemobile, Zwei/Dreirad, temporäre Strassenbeläge; Rail, insbesondere Bahn, Tram, Seilbahnen; Luftfahrt, insbesondere Raumfahrt, Flugzeuge, Drohnen, Satelliten; Marine, insbesondere Yacht & Superyacht, Fluss-, Transport-, Kreuzfahrtschiffe, Ölplattformen, Offshore-Anlagen, Unterwasser; Bau, insbesondere Fassaden und Dächer, Böden, Brücken, Aufzug, Rolltreppen, mobile Behausung; Innenausbau, insbesondere Möbel, Decken, Wände, Böden, Ladenbau Messebau, Bühnenbau, Bühnenbau, Display, Türen, Trennwände, Türen; Sport, insbesondere Wintersport und Wassersport; Logistik, insbesondere Container, Tanks, Paletten, Verpackungen; Energie, insbesondere Wind-Energieanlagen, Solar-Anlagen; Maschinenbau, insbesondere Stanzwerkzeuge, Verkleidungen, bewegte Teile; Medizin, insbesondere Zahnimplantate, Implantate, Fixierungen; Wehrtechnik, insbesondere Raketen.

Nachfolgend wird die Erfindung anhand von exemplarischen Ausführungen näher beschrieben.

Es zeigen:
- Figur 1:: Schnittskizzen von erfindungsgemässen Sandwichbauteilen mit Polymerzusammensetzungen als Inserts (Varianten A bis G);
- Figur 2:: Schnittskizzen von erfindungsgemässen Sandwichbauteilen mit Polymerzusammensetzungen als Inserts (Varianten A bis C);
- Figur 3:: Varianten möglicher Öffnungen des erfindungsgemässen Sandwichbauteils;
- Figur 4:: Schnittskizzen von erfindungsgemässen Sandwichbauteilen als, Eck- (A, B), T- (C) oder Endverbindungen (D);
- Figur 5:: Exothermie beim Einbringen der Polymerzusammensetzung im Vergleich zu Flüssigdübeln
- Figur 6:: Eine Seitenansicht einer Wabenplatte;
- Figur 7:: Eine Draufsicht einer Wabenplatte ohne zweite Decklage.

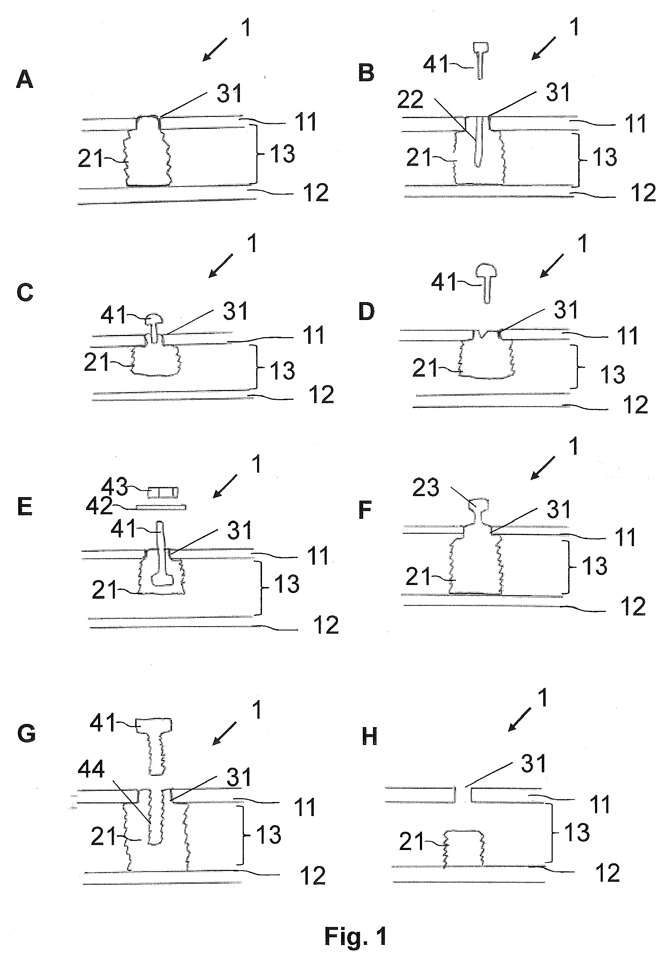

Figur 1 zeigt erfindungsgemässe Sandwichbauteile 1 aufweisend eine erste Decklage 11 und eine zweite Decklage 12, welche durch eine Zwischenschicht 13 getrennt sind. Für die nachfolgend beschriebenen Ausführungen wurde durch die erste Decklage 13 eine Öffnung 31 gebohrt und Material der Zwischenschicht 13 entfernt. Im Bereich einer Öffnung 31 und im Bereich der Zwischenschicht 13 befindet sich eine vernetzte Polymerzusammensetzung 21 als Insert.

In Variante A steht die Polymerzusammensetzung 21 in Kontakt mit der zweiten Decklage 12. In die Polymerzusammensetzung 21 kann ein Verbindungsmittel an- oder eingebracht werden, beispielsweise kann eine Schraube eingedreht werden.

In Variante B weist die Polymerzusammensetzung 21 eine Aussparung 22 auf, welche zum Einbringen eines Verbindungsmittels, hier einer Schraube 41, ausgestaltet ist.

Variante C zeigt eine Polymerzusammensetzung 21 als Insert, welche nicht in Kontakt mit der zweiten Decklage 12 steht. Hierbei ist eine Schraube 41 in die Polymerzusammensetzung 21 eingebracht.

Variante D zeigt eine Polymerzusammensetzung 21 als Insert, welche nicht in Kontakt mit der zweiten Decklage 12 steht, und weist eine Positionierungshilfe 23, hier eine Kerbe, in der Polymerzusammensetzung im Bereich der Öffnung 31 auf. Mittels der Positionierungshilfe 31 wird eine Schraube 41 am zentralen Bereich der Polymerzusammensetzung positioniert und eingebracht.

Variante E zeigt eine Polymerzusammensetzung 21 als Insert, welche nicht in Kontakt mit der zweiten Decklage 12 steht, und eine in der Polymerzusammensetzung vorpositionierte Schraube 41 auf, wobei das Gewinde der Schraube durch eine Öffnung 31 aus dem Sandwichbauteil 31 hinausragt. Die Schraube 41 wurde vor dem Einbringen der Polymerzusammensetzung 21 im Bereich der Zwischenschicht 13 positioniert und anschliessend mit der Polymerzusammensetzung 21 umspritzt. Eine Deckplatte 42 und eine Mutter 43 können an das freiliegende Gewinde der Schraube 41 angebracht werden.

Die Varianten C, D und E sind besonders vorteilhaft zur Entkopplung von Vibrationen, akustischen und/oder thermischen Entkopplungen. Des Weiteren können Kräfte gerichtet nur auf eine der Decklagen abgeleitet werden.

In Variante F steht die Polymerzusammensetzung 21 in Kontakt mit der zweiten Decklage 12. Die Polymerzusammensetzung 21 ragt durch die Öffnung 31 aus der ersten Decklage 11 hinaus und weist ein Positionierungselement oder Fixierungselement 23 auf. Am Positionierungselement oder Fixierungselement 23 kann ein weiteres Element angebracht werden, welches derart ausgestaltet ist, dass es eine formschlüssige Verbindung mit Positionierungselement oder Fixierungselement 23 ausbildet. Positionierungselemente oder Fixierungselemente können Laschen, Winkel, Bolzen, Clips, Hülsen, Innengewinde, Schrauben, Stifte, Aussparungen, Vorsprünge, Schienen, Widerhaken oder Nieten sein.

In Variante G weist die Polymerzusammensetzung 21 ein Innengewinde 44 auf, welches zum Eindrehen einer Schraube 41 ausgestaltet ist.

Variante H zeigt ein Sandwichbauteil 1, wobei die Polymerzusammensetzung 21 in Kontakt mit der zweiten Decklage 12 steht, nicht jedoch mit der ersten Decklage 11. Dies ist besonders vorteilhaft zur Entkopplung von Vibrationen, akustischen und/oder thermischen Entkopplungen. Des Weiteren können Kräfte gerichtet nur auf eine der Decklagen abgeleitet werden.

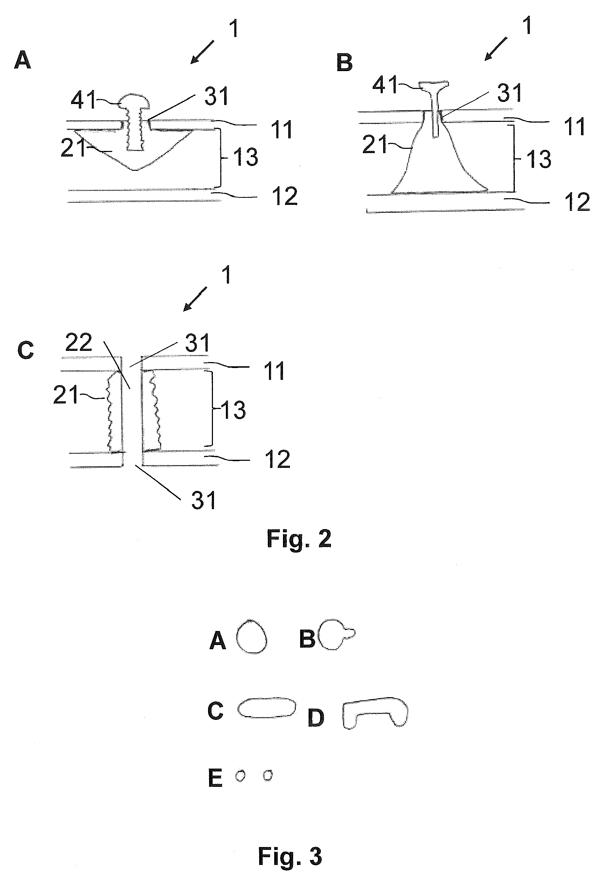

Figur 2 zeigt weitere erfindungsgemässe Sandwichbauteile 1 aufweisend eine erste Decklage 11 und eine zweite Decklage 12, wobei eine Zwischenschicht 13 zwischen den beiden Decklagen 11, 12 positioniert ist. In Variante A weist die erste Decklage 11 eine Öffnung 31 auf. Durch spezielle Hinterschnittfräsen wird Material der Zwischenschicht entfernt und so die Form der hinterher eingebrachten Polymerzusammensetzung 21 in der Zwischenschicht vorgegeben. Durch die Öffnung 31 wird eine vernetzbare Polymerzusammensetzung 21 in einen Bereich der Zwischenschicht 13 injiziert wurde. Die Polymerzusammensetzung 21 bildet eine Hinterschneidung und steht bereichsweise in Kontakt mit der der Zwischenschicht 13 zugewandten Oberfläche der ersten Decklage 11. Derart ist eine Hinterschneidung an der ersten Decklage 11 ausgebildet. Eine Schraube 41 ist in der vernetzten Polymerzusammensetzung 21 positioniert. Derart wird eine hohe Krafteinleitung gewährleistet. Variante A ist besonders vorteilhaft zur Entkopplung von Vibrationen, akustischen und/oder thermischen Entkopplungen. Des Weiteren können Kräfte gerichtet nur auf eine der Decklagen abgeleitet werden.

In Variante B steht die Polymerzusammensetzung 21 in Kontakt mit der zweiten Decklage 12. Dabei ist die Form der Polymerzusammensetzung 21 im verfestigten Zustand derart gewählt, dass eine verbesserte Krafteinleitung gewährleistet wird. Im Kontaktbereich zwischen der Polymerzusammensetzung 21 und der zweiten Decklage 12 ist die Polymerzusammensetzung 21 verbreitert im Vergleich zum Bereich der Öffnung 31, so dass eine hohe Kraftableitung auf die Decklage 12 möglich ist.

In Variante C steht die Polymerzusammensetzung 21 in Kontakt mit der ersten Decklage 11 und der zweiten Decklage 12. In der ersten Decklage 11 befindet sich eine Öffnung 31. In der zweiten Decklage 12 befindet sich eine Öffnung 31'. Die Polymerzusammensetzung 21 dient auch als Distanzhalter der beiden Decklagen 11, 12 bei lokalem Druck senkrecht zur Platte. Die Polymerzusammensetzung 21 weist eine Aussparung 22 auf, die sich von der Öffnung 31 zur Öffnung 31' erstreckt. Derart kann ein Verbindungsmittel, beispielsweise ein Stift, durch die Öffnungen 31, 31' geführt und positioniert werden. Derart können krafteinleitende Verbindungen über die erste Decklage 11 und die zweite Decklage 12 ausgestaltet werden.

Figur 3 zeigt Öffnungen eines erfindungsgemässen Sandwichbauteils (vgl. 31 in Figuren 1 und 2). Die Öffnung kann kreisrund (Variante A), kreisrund mit mindestens einer Kerbe (Variante B), als gerader Schlitz (Variante C), als einseitig gekrümmter Schlitz oder zweiseitig gekrümmter Schlitz (Variante D) ausgestaltet sein. Ebenso kann die Öffnung mehrere, vorzugsweise zwei, kreisrunde Öffnungen zum Einbringen der Polymerzusammensetzung des erfindungsgemässen Bauteils aufweisen (Variante E). In den Varianten B bis E sorgen die Öffnungen für eine Verdrehsicherung der Polymerzusammensetzung (vgl. 21 in Figuren 1 und 2) im Sandwichbauteil (vgl. 1 in Figuren 1 und 2), sofern die Polymerzusammensetzung im Bereich der Öffnung angeordnet ist.

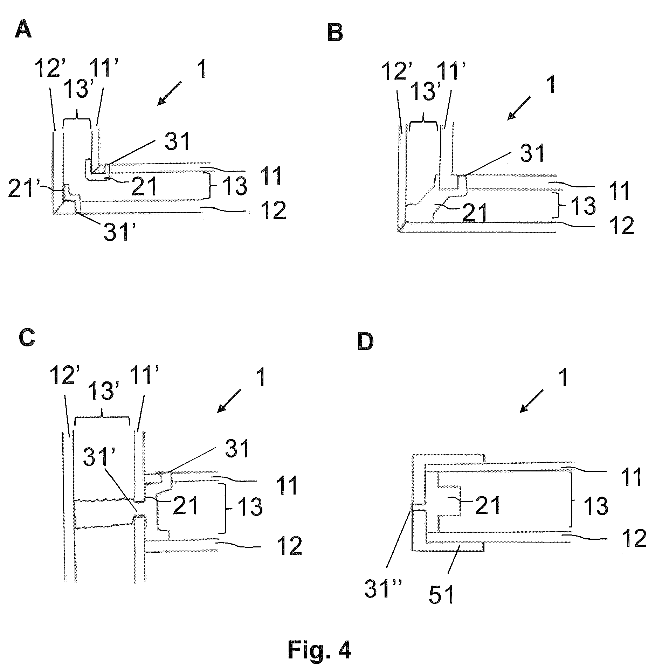

Figur 4 zeigt erfindungsgemässen Sandwichbauteilen mit Eck- (Varianten A, B), T- (Variante C) oder Endverbindungen (Variante D).

Variante A zeigt ein Sandwichbauteil 1 mit einer ersten Sandwichplatte und einer zweiten Sandwichplatte. Die erste Sandwichplatte wird von einer ersten Decklage 11 und einer zweiten Decklage 12 gebildet, wobei die Decklagen 11 und 12 durch eine Zwischenschicht 13 separiert sind. Die erste Decksicht 11 weist eine Öffnung 31 auf. Die zweite Decksicht 12 weist eine Öffnung 31' auf. Die zweite Sandwichplatte wird von einer ersten Decklage 11' und einer zweiten Decklage 12' gebildet, wobei die Decklagen 11' und 12' durch eine Zwischenschicht 13' separiert sind. Die erste Sandwichplatte und die zweiter Sandwichplatte bilden eine Eckverbindung aus, wobei die erste Decklage 11 mit der ersten Decklage 11', die zweite Decklage 12 mit der zweiten Decklage 12' und die Zwischenschicht 13 mit der Zwischenschicht 13' in Kontakt stehen.

Durch die Öffnung 31 wurde eine erste Polymerzusammensetzung 21 in einen Bereich der Zwischenschicht 13 und einen Bereich der Zwischenschicht 13' injiziert, wobei die Polymerzusammensetzung 21 in Kontakt mit den den Zwischenschichten 13 und 13' zugewandten Oberflächen der Decklagen 11 und 11' steht. Durch die Öffnung 31' wurde gleichermassen eine zweite Polymerzusammensetzung 21' in einen Bereich der Zwischenschicht 13 und einen Bereich der Zwischenschicht 13' injiziert, wobei die Polymerzusammensetzung 21 in Kontakt mit den den Zwischenschichten 13 und 13' zugewandten Oberflächen der Decklagen 12 und 12' steht. Bevorzugt weisen die erste Polymerzusammensetzung 21 und die zweite Polymerzusammensetzung 21' die gleiche chemische Zusammensetzung auf. Derart wird auf besonders einfache Art und Weise eine Eckverbindung zwischen zwei Sandwichplatten ausgebildet. Die vorgängig erläuterten Vorteile für Sandwichbauteile gelten hier gleichermassen.

Variante B unterscheidet sich dadurch von Variante A, dass eine einzige Öffnung 31 in der ersten Decklage 11 ausgebildet ist, durch welche eine Polymerzusammensetzung 21 injiziert wird. Hierbei steht die Polymerzusammensetzung 21 in Kontakt mit der den Zwischenschichten 13 und 13' zugewandten Oberflächen der Decklagen 11, 11', 12, 12'. Die Polymerzusammensetzung 21 bildet eine Strebe zwischen den Decklagen im Bereich der Eckverbindung. Derart wird auf besonders einfache Art und Weise eine Eckverbindung zwischen zwei Sandwichplatten ausgebildet. Die vorgängig erläuterten Vorteile für Sandwichbauteile gelten hier gleichermassen.

Variante C zeigt eine T-Verbindung einer ersten Sandwichplatte und einer zweiten Sandwichplatte. Die erste Sandwichplatter ist wie für Variante B beschrieben ausgestaltet. Die zweite Sandwichplatte weist in der ersten Decklage 11' eine Öffnung 31' auf. Die ersten und die zweite Sandwichplatte sind in einem Winkel von im Wesentlichen 90° angeordnet. Die Öffnung 31' der zweiten Sandwichplatte ist im Bereich der Zwischenschicht 13 der ersten Sandwichplatte angeordnet. Andere Winkel sind anwendungsspezifisch ebenfalls möglich. Durch die Öffnung 31 wird eine Polymerzusammensetzung 21 in einen Bereich der Zwischenschicht 13 und in einen Bereich 13' injiziert. Hierbei gelangt die Polymerzusammensetzung 21 anteilig durch die Öffnung 31' in die Zwischenschicht 13'. Die Polymerzusammensetzung 21 verbindet die Decklagen 11, 12, 11' und 12'. Derart wird eine T-Verbindung zweier Sandwichplatten auf einfache Art und Weise ausgebildet. Die vorgängig erläuterten Vorteile für Sandwichbauteile gelten hier gleichermassen.

Variante D zeigt ein Sandwichbauteil 1 aufweisend eine erste Decklage 11 und eine zweite Decklage 12, wobei die Decklagen 11, 12 durch eine Zwischenschicht 13 separiert sind. In einem Endbereich der Decksichten 11 und 12 ist eine Abdeckung als Schiene 51 angeordnet, welche in Kontakt mit den von der Zwischenschicht 13 wegweisenden Oberflächen der Decklagen 11 und 12 und dem Bereich der Zwischenschicht 13 steht, der nicht in Kontakt mit den Decklagen 11, 12 steht. Die Schiene 51 weist eine Öffnung 31" auf, welche in dem vorstehend genannten Bereich der Zwischenschicht 13 angeordnet ist. Durch die Öffnung 31" wurde eine Polymerzusammensetzung 21 in den Endbereich der Zwischensicht 13 injiziert. Die Polymerzusammensetzung steht in Kontakt mit Oberflächen der Decklagen 11 und 12, welche der Zwischensicht 13 zugewandt sind.

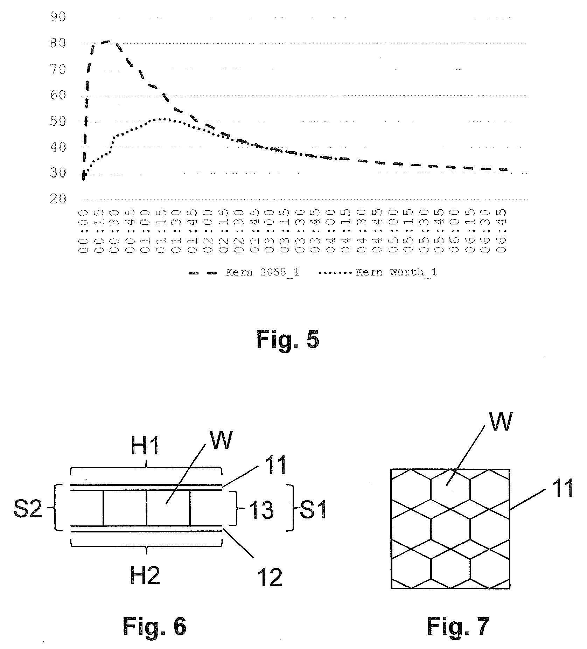

Figur 5 zeigt den Kurvenverlauf der Temperaturen einer erfindungsgemässen Polymerzusammensetzung und eines handelsüblichen Flüssigdübels gemessen im Kern. Auf der X-Achse ist die Zeit in min:sek und auf der Y-Achse die Temperatur in °C aufgetragen. Für den Vergleich wurde eine zweiteilige Form aus Polyethylen hergestellt. Die Form weist eine kreisrunde Bohrung mit 10 mm Durchmesser und 15 mm Tiefe auf. Die Polymerzusammensetzungen wurden bei Raumtemperatur mittels Kartuschen eingebracht und der Temperaturverlauf mit einem Temperaturfühler gemessen und aufgezeichnet. Die Temperaturmessung erfolgte in 4 mm Tiefe.

Der Temperaturverlauf ist für beide Systeme exotherm, wobei die erfindungsgemässe Polymerzusammensetzung (Kern 3058_1) eine deutlich höher Kerntemperatur mit 80 °C im Vergleich zur Vergleichszusammensetzung des Flüssigdübels mit einer Kerntemperatur von 50 °C aufweist. Diese wird zudem schneller, d.h. innerhalb von 15 sek erreicht. Die Vergleichszusammensetzung erreicht die höchste Kerntemperatur nach ca. 1 min 15 sek.

Mit der erfindungsgemässen Polymerzusammensetzung in einem Sandwichbauteil wird damit eine bessere Verankerung, beispielsweise durch ein Anschmelzen bzw. Aufschmelzen der Zwischenschicht aus Thermoplasten, bspw. von Sandwichbauteilen mit einer Zwischenschicht aus Polystyrol erreicht. Aluminiumsandwichbauteile weisen oftmals Polymerbeschichtungen auf, welche ebenfalls durch die hohe Temperatur der Polymerzusammensetzung bereichsweise aufschmelzen und zu einer verbesserten Verankerung führen. Des Weiteren können derart bspw. Plastikschrauben verbessert in der eingebrachten Polymerzusammensetzung verankert werden.

Figur 6 zeigt eine Seitenansicht einer Wabenplatte als Sandwichbauteil. Die Wabenplatte weist eine Hauptfläche H1 einer ersten Decklage 11, eine Hauptfläche H2 einer zweiten Decklage 12 und eine zwischen den Decklagen positionierte Zwischenschicht 13, welche Waben W aufweist ist. Die Hauptflächen H1 und H2 weisen von der Zwischenschicht 13 weg. Die Seitenbereiche S1 und S2 werden durch die Decklagen 11 und 12 und die Zwischenschicht 13 gebildet. Selbstverständlich weist ein Sandwichbauteil bzw. eine Wabenplatte mit rechteckigen Hauptflächen H1, H2 vier Seitenbereiche auf.

Figur 7 zeigt eine Draufsicht einer Wabenplatte wie für Figur 6 beschrieben, wobei die zweite Decklage 12 zur besseren Anschaulichkeit nicht dargestellt ist. Die Zwischenlage 13 wird durch die Waben W gebildet. Im Seitenbereich der Wabenplatte kann eine Polymerzusammensetzung mit dem einfindungsgemässen Verfahren eingebracht werden.

## Patentansprüche

1. Sandwichbauteil (1) umfassend
- eine erste Hauptfläche mit einer ersten Decklage (11) und eine zweite Hauptfläche mit einer zweiten Decklage (12), insbesondere eine erste Deckplatte und eine zweite Deckplatte, wobei die erste Decklage (11) und/oder die zweite Decklage (12) eine Öffnung (31), Schwächung oder Markierung aufweist und/oder im Seitenbereich, insbesondere in einer Abdeckung (51), eine Öffnung (31), Schwächung oder Markierung vorgesehen ist,
- mindestens eine Zwischenschicht (13), wobei die Zwischenschicht (13) zwischen der ersten Decklage (11) und der zweiten Decklage (12) positioniert ist, und
- eine in die Zwischenschicht (13) insbesondere injizierte und vorzugsweise vernetzte Polymerzusammensetzung (21), die zwischen der ersten Decklage (11) und der zweiten Decklage (12) und im Wesentlichen innerhalb der Zwischenschicht (13) und/oder im Bereich der Öffnung (31), Schwächung oder Markierung angeordnet ist,
derart, dass ein mechanisches Verbindungsmittel (41) durch die erste Decklage (11) und/oder die zweite Decklage (12) und/oder im Seitenbereich, insbesondere der Abdeckung (51), im Bereich der Öffnung (31), Schwächung oder Markierung, insbesondere durch die erste Decklage (11) und/oder die zweite Decklage (12) und/oder den Seitenbereich, insbesondere die Abdeckung (51), hindurch ragend, in der Polymerzusammensetzung (21) fixiert oder fixierbar ist.

2. Sandwichbauteil (1) nach Anspruch 1, wobei das mechanische Verbindungsmittel (41) ausgewählt ist aus der Gruppe umfassend Schraube, Gewindestange, Clip, Bolzen, Buchsen, Hülsen, Distanzhalter, Stifte, Nagel, Haken, Klammer, Feder, Nieten, Dübel, Profile, Laschen, Scharniere, Magnete.

3. Sandwichbauteil (1) nach Anspruch 1 oder 2, wobei die Polymerzusammensetzung (21) eine isocyanathaltige Komponente A und eine aminhaltige Komponente B umfasst, wobei
- die Komponente A ein Isocyanat-terminiertes Präpolymer mit einer Isocyanat-Funktionalität von ≥ 1,7, vorzugsweise von 1,7 < f_{NCO} < 3, besonders bevorzugt im Bereich von 2 bis 3; und
- die Komponente B wenigstens ein Di- und/oder Polyamin, vorzugsweise ein Polyetherdiamin und/oder Polyetherpolyamin enthält, und
wobei das stöchiometrische Verhältnis von Isocyanatgruppen in Komponente A zu Amingruppen in Komponente B 0,5 bis 1,2, besonders bevorzugt 1 beträgt.

4. Sandwichbauteil (1) nach einem der Ansprüche 1 bis 3, wobei die Öffnung (41) ausgewählt ist aus der Gruppe Schlitz, Bohrung, insbesondere kreisrunde Bohrung.

5. Sandwichbauteil (1) nach einem der Ansprüche 1 bis 4, wobei das Sandwichbauteil (1) eine Metall-Wabenplatte, insbesondere eine Aluminium-Wabenplatte, eine Kunststoffkernwabenplatte, eine Holzwerkstoffwabenplatte, eine Schaumkernplatte oder eine Faserkern-Platte ist.

6. Sandwichbauteil (1) nach einem der Ansprüche 1 bis 5, wobei die Polymerzusammensetzung (21) derart ausgestaltet ist, dass die Polymerzusammensetzung (21) eine Hinterschneidung ausbildet.

7. Sandwichbauteil (1) nach einem der Ansprüche 1 bis 6, wobei die Polymerzusammensetzung (21) derart ausgestaltet ist, dass die Polymerzusammensetzung (21) eine stoffschlüssige und/oder formschlüssige und/oder kraftschlüssige Verbindung ausbildet.

8. Verfahren zur Herstellung eines Sandwichbauteils (1), insbesondere nach einem der Ansprüche 1 bis 7, mit mindestens einem Insert und/oder Onsert aus einer vorzugsweise vernetzbaren Polymerzusammensetzung (21) umfassend die Schritte
- Bereitstellen eines Sandwichbauteils (1) umfassend
o eine erste Hauptfläche mit einer ersten Decklage (11) und eine zweite Hauptfläche mit einer zweiten Decklage (12), insbesondere eine erste Deckplatte und eine zweite Deckplatte, wobei die erste Decklage (11) und/oder die zweite Decklage (12) eine Öffnung (31), Schwächung oder Markierung aufweist und/oder im Seitenbereich, insbesondere in einer Abdeckung (51), eine Öffnung (31), Schwächung oder Markierung vorgesehen ist, und
o mindestens eine zwischen der ersten Decklage (11) und der zweiten Decklage (12) positionierte Zwischenschicht (13),
- Einbringen, insbesondere Injizieren, einer vernetzbaren Polymerzusammensetzung (21) an der Stelle der Markierung oder der Schwächung oder durch die Öffnung (31) in der ersten Decklage (11) und/oder der zweiten Decklage (12) und/oder im Seitenbereich, insbesondere der Abdeckung (51), in die Zwischenschicht (13), und
- Verfestigen der Polymerzusammensetzung (21) zwischen den Decklagen (11,12) derart, dass ein mechanisches Verbindungsmittel (41) durch die erste Decklage (11) und/oder die zweite Decklage (12) und/oder den Seitenbereich, insbesondere die Abdeckung (51), im Bereich der Öffnung (31), Schwächung oder Markierung, insbesondere durch die erste Decklage (11) und/oder die zweite Decklage (12) und/oder den Seitenbereich, insbesondere die Abdeckung (51), hindurch ragend, in der Polymerzusammensetzung (21) fixierbar ist.

9. Verfahren nach Anspruch 8, wobei die vernetzbare Polymerzusammensetzung (21) ein, insbesondere zwei-komponentiger, Klebstoff ist.

10. Verfahren nach Anspruch 8 oder 9, wobei die vernetzbare Polymerzusammensetzung(21) eine Topfzeit im Bereich von 1 bis 15 sek, bevorzugt 2 bis 10 sek, besonders bevorzugt 3 bis 7 sek, aufweist.

11. Verfahren nach einem der Ansprüche 8 bis 10 umfassend den Schritt des Anbringens oder Einbringens eines Verbindungsmittels (41) an bzw. in die Polymerzusammensetzung (21) vor oder nach dem Verfestigen der Polymerzusammensetzung (21).

12. Verfahren nach Anspruch 11, wobei das Verbindungsmittel (41) ausgewählt ist aus der Gruppe umfassend Schraube, Gewindestange, Clip, Bolzen, Buchsen, Hülsen, Distanzhalter, Stifte, Nagel, Hacken, Klammer, Feder, Nieten, Dübel, Profile, Laschen, Scharniere, Magnete.

13. Kit für die Herstellung eines Sandwichbauteils (1), insbesondere gemäss einem der Ansprüche 1 bis 8, mit mindestens einem Insert und/oder Onsert aus einer vorzugsweise vernetzten Polymerzusammensetzung (21) aufweisend
- eine vernetzbare, insbesondere zwei-komponentige, Polymerzusammensetzung (21),
- Anwendungshinweise zur Durchführung eines Verfahrens gemäss einem der Ansprüche 8 bis 12.

14. Verfahren zum Verbinden eines Sandwichbauteils (1) nach einem der Ansprüche 1 bis 7 an ein weiteres Element umfassend den Schritt des Anbringens oder Einbringens eines Verbindungsmittels (41) in die Polymerzusammensetzung (21) vor oder nach dem Verfestigen der Polymerzusammensetzung (21).

15. Verfahren nach Anspruch 14, wobei das Verbindungsmittel (41) ausgewählt ist aus der Gruppe umfassend Schraube, Gewindestange, Clip, Bolzen, Buchsen, Hülsen, Distanzhalter, Stifte, Nagel, Haken, Klammer, Feder, Nieten, Dübel, Profile, Laschen, Scharniere, Magnete.

16. Verwendung eines Sandwichbauteils (1) nach einem der Ansprüche 1 bis 7 im Bereich Road, Rail, Luftfahrt, Marine, Bau, Innenausbau, Sport, Logistik, Energie, Maschinenbau, Medizin, Wehrtechnik.
